# EUROPÄISCHE PATENTANMELDUNG

(11) **EP 1 327 512 A1**
(43) Veröffentlichungstag der Anmeldung: **16.07.2003**
(21) Anmeldenummer: 03000230.7
(22) Anmeldetag: 08.01.2003
(51) Int. Cl.: B29C 45/54, B29C 45/18

(54) **Verfahren zum Herstellen von schlagzähmodifizierten Thermoplast-Kunststoffteilen**

(30) Priorität: 15.01.2002 DE 10201291
(71) Anmelder: Krauss-Maffei Kunststofftechnik GmbH, 80997 München (DE)
(72) Erfinder: Wobbe, Hans, 82211 Herrsching (DE); Bürkle, Erwin, 83671 Benediktbeuern (DE); Prautzsch, Günter, 50674 Köln (DE); Klotz, Bernd, 85232 Günding/Bergk. (DE); Wohlrab, Walter, 91781 Weissenburg (DE)
(74) Vertreter: Zollner, Richard

(57) **Zusammenfassung**

Zur Herstellung von schlagzähmodifizierten Thermoplast-Kunststoffteilen wird erfindungsgemäß vorgeschlagen, einen kontinuierlich arbeitenden Zwei-Wellen-Extruder (1) zu verwenden, in dem Thermoplastmaterial plastifiziert wird und Schlagzähmodifikatoren, Verstärkungsstoffe oder Legierungsmittel beigemischt werden.

## Beschreibung

Die Erfindung bezieht sich auf ein Verfahren zum Herstellen von schlagzähmodifizierten Thermoplast-Kunststoffteilen.

Bei der Herstellung derartiger Bauteile im klassischen Spritzguß ist die mögliche Zähigkeit der Bauteile werkstofflich und prozeßtechnisch begrenzt. Insbesondere können Zuschlagstoffe in klassischen Spritzgießmaschinen mit einem diskontinuierlich arbeitenden Plastifizieraggregat durch mehrfaches Aufschmelzen in einem vorgeschalteten Compoundiervorgang mit Granulierung und anschließendes Wiedererwärmen und Spritzgießen, sowie lange Verweilzeiten geschädigt werden.

Verfahren zur Herstellung von thermoplastischen Formmassen sind aus der DE 38 24 455 sowie aus der DE 41 42 577 bekannt. Mit diesen Verfahren hergestellte Formmassen müssen jedoch zur Formgebung einer sogenannten zweiten Wärme unterworfen werden.

Dies wird erfindungsgemäß durch ein Verfahren mit den Merkmalen des Patentanspruchs 1 vermieden; die abhängigen Ansprüche betreffen vorteilhafte Weiterentwicklungen der Erfindung.

Das erfindungsgemäße Verfahren ermöglicht es, eine gute Verteilung von Schlagzähmodifikatoren, Verstärkungsstoffen oder anderen Legierungsmitteln im Fertigprodukt sicherzustellen, ohne diese empfindlichen Materialien zu schädigen oder deren Dispersion in der Matrix zu verschlechtern. Somit können Bauteile mit guten mechanischen Eigenschaften erzielt werden.

Statt eines diskontinuierlich laufenden Einschnecken-Plastifizieraggregats kommt ein kontinuierlich arbeitender Zwei-Wellen-Extruder mit gleichsinnig drehenden Wellen zum Einsatz, wie er beispielsweise aus der DE-OS 198 59 472 A1 zur Herstellung von faserverstärkten Kunststoff-Bauteilen bekannt ist. Der Extruder plastifiziert materialschonend kontinuierlich. Der Materialstrom wird abwechselnd in zwei Spritzzylinder oder in einen Speicherzylinder und einen Spritzzylinder gefördert. Jeweils ein Zylinder steht zur Füllung bereit, der zweite ist zeitgleich für den aktuellen Einspritzvorgang und Nachdruck im Einsatz. Dieses Prinzip, im Zusammenspiel mit Seitenförderern, sogenannten "Side-Feeders", die Verstärkungsstoffe oder Additive bzw. "Additivpahete" sowie Füllstoffe erst sehr spät in den Schmelzestrom einzuziehen gewährleistet beste Mischmöglichkeiten auch mit komplizierten Polymermischungen.

### Auf diese Weise können direkt hergestellt werden:

Teile aus:
- physikalisch gemischten teilvernetzten Elastomeren (z.B. EPDM) mit teilkristallinen Kunststoffen (z.B. PP, PA, PBT, PET).
- verzugsarme Teile aus PBT/ASA oder PBT/SAN Mischungen z.B. für elektrotechnische Komponenten (Sicherungsboxen)
- schlagzähe Teile aus PP/EPDM wie z.B. Autostoßfänger
- schlagzähe Teile aus PA6/EPDM wie z.B. Ski-Bindungs- oder Ski-Schuhteile
- schlagzähe Teile aus PA66/EPDM wie z.B. Sportgeräte
- schlagzähe Teile aus PA66/EPDM mit Glasverstärkung wie z.B. Kabelverbinder/Isolatoren in Hochspannungs-Überlandleitungen
- verzugsarme Teile aus Kunststoffen mit Mineralpulververstärkung z.B. Radzierblenden
- verzugsarme Teile aus Kunststoffen mit Glaskugel-Verstärkung z.B. elektronische Gehäuse, Steckverbinder
- verzugsarme Teile mit erhöhter Festigkeit aus Faser/Mineralpulver-Mischungen, wie z.B. Automobil-Zylinderkopfhauben oder Styling-Abdeckungen im Motorraum
- verzugsarme Teile mit Faserverstärkung mit Schlagzähmodifizierung wie z.B. Windabweiser bei Automobil-Schiebedächern
- Bauteile aus Kunststoffen mit Holzmehlfüllung z.B. Reserveradabdeckung, Kofferraum-Seitenverkleidung
- Bauteile aus Kunststofflegierungen mit niedrigem Wärmeausdehnungskoeffizienten z.B. PBT/SAN für Karosserie-Außenteile
- Bauteile aus Sinterpulvern mit einem Bindemittel zum anschließenden Sintern sowohl in der Pulvermetallurgie als auch in der Keramikerzeugung, z.B. Wolframschwermetall für Werkzeugschneiden oder Porzellan für elektrische Isolatoren
- Bauteile mit metallischen Pulvern oder Gaphit-Pulver in einer Polymermatrix, zur Erniedrigung des elektrischen Eigenwiderstandes, z.B. antistatische Bauteile in Gasheizanlagen, abschirmende Bauteile in mikroelektronischen Geräten
- Bauteile aus reaktiv oder physikalisch geschäumten Thermoplasten wie z.B. Automobilinnenraumteile, Lärmschutzabdeckungen
- Bauteile mit Anteilen an Pigmenten wie z.B. durchgefärbte Müllbehälter
- Bauteile mit Anteilen an Flammschutzmitteln wie z.B. Sicherungsträger für die Bauindustrie
- Bauteile mit Anteilen von Stabilisatoren und Antioxidatien wie z.B. PKW Außenhaut-Teile.

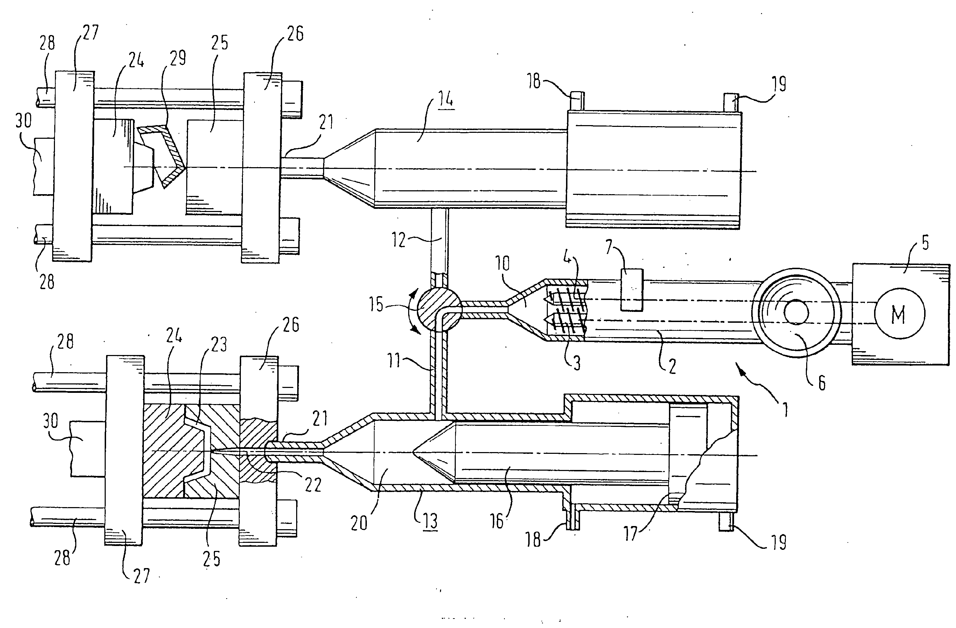

Die Zeichnung zeigt einen Zwei-Wellen-Extruder 1, einen sogenannten Compounder. In einem Gehäuse 2 sind zwei Schnecken 3, 4 aufgenommen, die gleichsinnig drehen und miteinander kämmen und von einem Motor 5 angetrieben werden. Kunststoffgranulat wird über einem Einfülltrichter 6 in das Gehäuse 2 eingebracht, durch die sich drehenden Schnecken 3, 4 plastifiziert und über einen Schneckenvorraum 10, ein schaltbares Ventil 15 und eine Leitung 11 in einen Zylinderraum 20 eines Einspritzzylinders 13 kontinuierlich transportiert.

Wenn der Zylinderraum 20 mit Material gefüllt ist, wird das Schaltventil 15 umgeschaltet, und das plastifizierte Material wird über die Leitung 12 in den Zylinderraum eines zweiten Einspritzzylinders 14 eingebracht, so daß der Extruder 1 kontinuierlich betrieben werden kann.

Das Material aus dem Zylinderraum 20 des ersten Zylinders wird durch Bewegung eines Kolbens 16 in die Kavität 23 eines Formwerkzeugs 24, 25 eingespritzt. Die beiden Werkzeughälften 24, 25 des Formwerkzeugs sind in an sich bekannter Weise an einer festen 26 und einer beweglichen 27 Aufspannplatte befestigt. Während ein Bauteil mittels des ersten Spritzgießzylinders hergestellt wird, wird der Zylinderraum des zweiten Spritzgießzylinders aufgefüllt, und ein gefertigtes Bauteil 29 kann entnommen werden. Im übrigen sind beide dem Extruder 1 nachgeschalteten Zweige identisch aufgebaut und werden, wie dargestellt, wechselweise betrieben.

Erfindungsgemäß werden die Zuschlagstoffe über einen Seitenförderer 7 in das plastifizierte Material eingebracht.

Dabei kann die Position des Seitenförderers 7 wie dargestellt gewählt werden. Vorzugsweise ist der Seitenförderer jedoch in Richtung auf den Schneckenvorraum 10 des Extruders stromabwärts soweit verschoben, daß die Verweilzeit der Zuschlagstoffe im Extruder so groß ist, daß eine ausreichende Vermischung durch die Schnecken 3, 4 gewährleistet ist, und andererseits die Verweilzeit so kurz ist, daß die Zuschlagstoffe nicht durch den Mischvorgang geschädigt werden.

## Patentansprüche

1. Verfahren zum Herstellen von schlagzähmodifizierten Thermoplast- Kunststoffteilen, wobei man Thermoplastmaterial in einem kontinuierlich arbeitenden Zwei-Wellen-Extruder (1) mit zwei gleichsinnig drehenden Wellen (3, 4) plastifiziert und dem plastifizierten Thermoplastmaterial Schlagzähmodifikatoren, Verstärkungsstoffe oder Legierungsmittel beimischt,
**dadurch gekennzeichnet,**
**daß** das Extrudat zum Einspritzen in eine Form abwechselnd in zwei Spritzzylinder oder in einen Speicherzylinder und einen Spritzzylinder gefördert wird.

2. Verfahren nach Anspruch 1,
**dadurch gekennzeichnet,**
**daß** das Beimischen erst stromabwärts der Zufuhr von Thermoplastmaterial an geeigneter Stelle im Zwei-Wellen-Extruder (1) erfolgt.

3. Verfahren nach Anspruch 1 oder 2,
**dadurch gekennzeichnet,**
**daß** das Beimischen über einen Seitenförderer (7) erfolgt.
